# FASCICULE DE BREVET EUROPEEN

(11) **EP 2 904 240 B1**
(45) Date de publication et mention de la délivrance du brevet: **02.11.2016**
(21) Numéro de dépôt: 13773304.4
(22) Date de dépôt: 16.09.2013
(51) Int. Cl.: F23R 3/28, F23K 5/18, F23K 5/14, F16K 17/18, F02C 7/232, F16K 17/196

(54) **DISPOSITIF D'ALIMENTATION ET DE PURGE POUR INJECTEUR**
ZU- UND ABFLUSSVORRICHTUNG FÜR EINEN INJEKTOR
SUPPLY AND DRAIN DEVICE FOR AN INJECTOR

(30) Priorité: 01.10.2012 FR 1259285
(43) Date de publication de la demande: 12.08.2015
(73) Titulaire: Turbomeca, 64510 Bordes (FR)
(72) Inventeur: CARRERE, Bernard, F-64000 Pau (FR)
(74) Mandataire: Regimbeau
(86) Numéro de dépôt international: PCT/FR2013/052116
(87) Numéro de publication internationale: WO 2014/053721

(56) Documents cités:
- GB-A- 153 513
- JP-U- H02 124 379
- US-A- 2 986 159
- US-A- 3 498 056
- US-A- 3 685 532
- US-A1- 2010 263 755

## Description

### Domaine de l'invention

L'invention concerne un dispositif d'alimentation et de purge d'un injecteur de chambre de turbomachine. L'invention concerne également un injecteur de chambre de turbomachine, et une turbomachine.

### Présentation de l'Art Antérieur

Les injecteurs de turbomachine sont sensibles à la dégradation du carburant par la température.

Ce phénomène, appelé cokéfaction, apparaît lorsque la température du carburant dépasse un seuil critique.

Les injecteurs sont sensibles à ce phénomène en raison des perturbations d'écoulement du carburant, voire d'obstruction, qu'il entraîne.

Les perturbations d'écoulement dues à la cokéfaction ont des répercussions mécaniques sur les pièces situées en aval des injecteurs, mais aussi sur la qualité de la combustion.

Par ailleurs, l'obturation des injecteurs a un impact sur la qualité de la pulvérisation du carburant, qui n'est plus uniforme.

La combustion est alors mauvaise, ce qui entraîne une augmentation de la pollution des gaz émis par le turboréacteur, voire des problèmes plus graves, incluant une indisponibilité du turboréacteur.

Afin de protéger les injecteurs de la cokéfaction, il est connu d'utiliser des dispositifs permettant leur purge lors de l'arrêt de la turbomachine.

Ces dispositifs permettent de purger la rampe d'injection de carburant ainsi que les injecteurs par injection d'air comprimé.

Le document US 2010/0263755 décrit un dispositif de purge pour un circuit d'alimentation en carburant.

Dans les systèmes de l'état de la technique, comme celui décrit dans FR 2871519 de la demanderesse, le dispositif 100 de purge comprend un circuit 101 d'alimentation en air comprimé, et un circuit 102 d'alimentation en carburant, les deux circuits étant distincts et étant connectés en parallèle à l'entrée d'un injecteur 107. Le circuit 101 d'alimentation en air comprimé comprend un clapet 103 anti-retour, et le circuit 102 d'alimentation en carburant comprend un clapet 104 anti-retour, empêchant toute remontée d'air de purge dans le circuit d'alimentation en carburant.

Par ailleurs, dans certains injecteurs récents, il est parfois nécessaire de réguler l'alimentation en carburant des injecteurs en fonction de la pression du carburant.

Dans ce cas, la gestion de l'alimentation en carburant et de l'alimentation en air de purge nécessitent, selon l'état de la technique connu, l'utilisation d'une pluralité de circuits d'alimentation associés à des vannes à commande électrique.

Toutefois, ces solutions sont encombrantes et complexes, notamment en raison de la multiplication des pièces et des circuits. En outre, celles-ci présentent des risques de panne accrus.

### Présentation de l'invention

L'invention propose de pallier les inconvénients précités.

A cet effet, il est décrit un dispositif pour injecteur de turbomachine, selon la revendication 1.

L'invention concerne également un injecteur de chambre de turbomachine, caractérisé en ce qu'il comprend un dispositif tel que décrit précédemment, ainsi qu'une turbomachine comprenant un tel injecteur.

Un avantage de l'invention est de proposer un dispositif simple et compact.

Un autre avantage de l'invention est de proposer un dispositif unique et polyvalent, adapté à la fois à la régulation de l'alimentation en carburant et de l'air de purge.

Un autre avantage encore de l'invention est de proposer un dispositif permettant une purge complète.

Enfin, un autre avantage de l'invention est de reposer sur l'utilisation d'outils de régulation simples et peu coûteux.

### Présentation des figures

D'autres caractéristiques et avantages de l'invention ressortiront encore de la description qui suit, laquelle est purement illustrative et non limitative, et doit être lue en regard des dessins annexés sur lesquels :

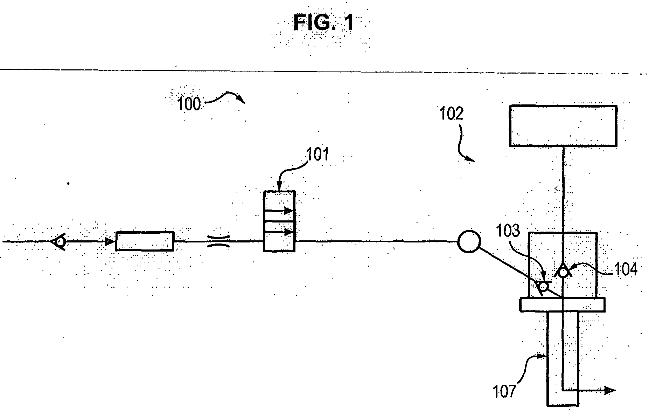

- la Figure 1 est une représentation d'un dispositif de purge selon l'art antérieur ;
- la Figure 2 est une représentation en coupe d'un mode de réalisation d'un dispositif selon l'invention ;
- la Figure 3 est une représentation en coupe d'un mode de réalisation d'un dispositif de l'invention ;
- la Figure 4 est une représentation de l'assemblage d'éléments du dispositif selon un mode de réalisation de l'invention ;
- la Figure 5 est une représentation d'un dispositif associé à des éléments d'injection ;
- la Figure 6 est une représentation d'un mode de réalisation d'un ensemble comprenant une pluralité de dispositifs selon l'invention ;
- la Figure 7 est une représentation d'un mode de réalisation d'un injecteur de chambre selon l'invention.

### Description détaillée

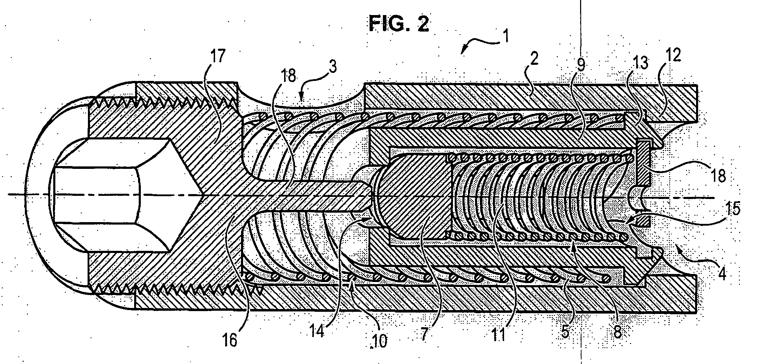

On a représenté en Figures 2 à 4 un mode de réalisation d'un dispositif 1 pour injecteur de turbomachine.

Le dispositif 1 comprend un conduit 2. Il s'agit par exemple d'un conduit de section circulaire, de forme généralement cylindrique.

Le conduit 2 présente au moins une première ouverture 3, et une deuxième ouverture 4.

Selon un mode de réalisation, l'une des ouvertures 3 est pratiquée dans une paroi du conduit, permettant une circulation des fluides orthogonale à l'axe longitudinal du conduit, et l'autre des ouvertures 4 est pratiquée à une extrémité axiale du conduit, permettant une circulation axiale des fluides.

Les fluides susceptibles de traverser le conduit d'une ouverture à l'autre sont principalement le carburant de la turbomachine, et l'air comprimé destiné à la purge, où un mélange des deux.

Le dispositif 1 comprend en outre un système 5 d'obturation du conduit, permettant de réguler le passage de fluides dans le conduit 2.

Le système 5 d'obturation est configuré pour :
- autoriser le passage de carburant de la première ouverture 3 vers la deuxième ouverture 4 uniquement à partir d'une première pression (P1) du carburant, pour le passage d'une alimentation en carburant,
- autoriser le passage d'air de la deuxième ouverture 4 vers la première ouverture 3 uniquement à partir d'une deuxième pression (P2) de l'air, pour le passage d'un air de purge, la deuxième pression étant supérieure à la première pression.

Ainsi, le dispositif 1 permet de gérer, via un unique conduit 2, à la fois l'alimentation en carburant, notamment de l'injecteur, et le passage de l'air de purge. Ces deux fluides se déplacent selon des sens opposés dans le conduit 2.

Comme on le constate, le dispositif 1 est apte à fonctionner de manière autonome.

P1 est par exemple, mais non limitativement, de l'ordre de 2.5 à 3 bars, tandis que P2 est par exemple, mais non limitativement, de l'ordre de 4 à 6 bars.

Dans un mode de réalisation, le système 5 d'obturation comprend une première tête 7 montée sur un premier module 8 élastique. Le module 8 élastique comprend par exemple un ressort.

Cette première 7 tête est apte à se déplacer pour autoriser la traversée de carburant de la première ouverture 3 vers la deuxième ouverture 4, uniquement à partir de la première pression P1.

En particulier, sous l'effet de la pression du carburant inséré dans le dispositif 1 au niveau de sa première ouverture 3, le premier module 8 élastique se comprime, et entraîne dans son mouvement la première tête 7.

Cette première tête 7 subit donc un déplacement, qui est en général une translation le long de l'axe du conduit 2. Ce déplacement permet de libérer un espace de circulation dans le conduit 2, permettant au carburant, introduit au niveau de la première ouverture 3, de s'échapper du conduit par la deuxième ouverture 4.

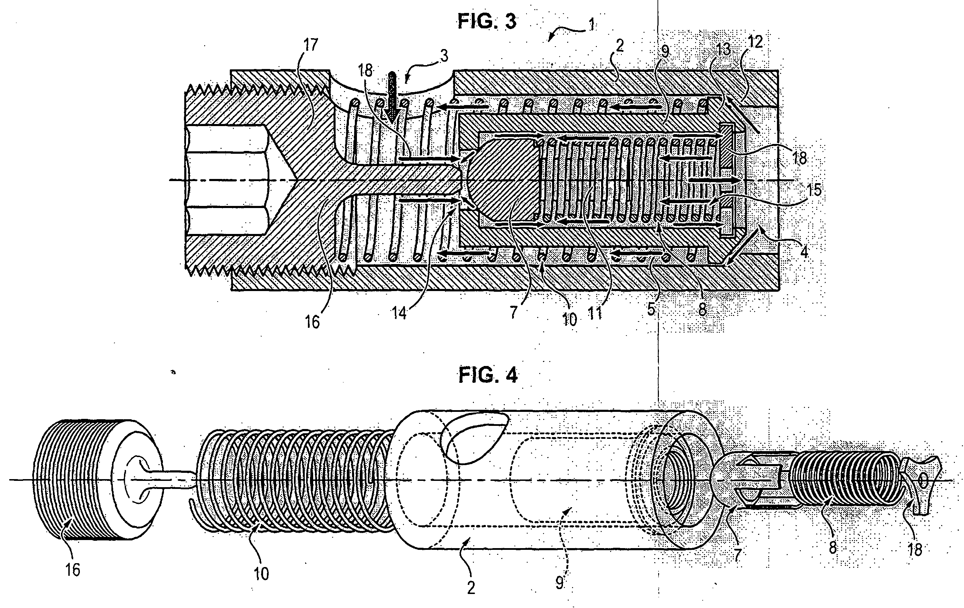

Dans le mode de réalisation illustré en Figure 3, la première tête 7 présente une forme de bille.

De même, dans un mode de réalisation, le système 5 d'obturation comprend une deuxième tête 9 montée sur un second module 10 élastique, ladite deuxième tête 9 étant apte à se déplacer pour autoriser la traversée d'air de la deuxième ouverture 4 vers la première ouverture 3, uniquement à partir de la deuxième pression P2. Le module 10 élastique comprend par exemple un ressort.

En particulier, sous l'effet de la pression de l'air comprimé inséré dans le conduit 2 au niveau de sa deuxième ouverture 4, le deuxième module 10 élastique se comprime, et entraîne dans son mouvement la deuxième tête 9. Cette deuxième tête 9 subit donc un déplacement, qui est en général une translation le long de l'axe longitudinal du conduit 2. Ce déplacement permet de libérer un espace de circulation dans le conduit, permettant à l'air, introduit au niveau de la deuxième ouverture 4, de s'échapper du conduit par la première ouverture 3.

Dans un mode de réalisation, la première tête 7 est apte à se mouvoir à l'intérieur de la deuxième tête 9.

Dans le mode de réalisation illustré sur les figures, la première tête 7, par exemple de révolution, présente un diamètre inférieur à la deuxième tête 9, également de révolution. La deuxième tête 9 présente un évidement 11 la traversant de part et d'autres, dans lequel la première tête 7 est apte à se mouvoir, guidée par le premier module 8 élastique. Dans ce cas, le premier module 8 élastique s'étend également à l'intérieur de l'évidement 11 précité. Le premier module 8 élastique peut notamment être fixé sur un support 18 maintenu par assemblage dans des rainures de la deuxième tête 9. Le support 18 présente lui-même des ouvertures pour le passage des fluides.

L'évidement 11 se termine en deux ouvertures 14, 15 situées de part et d'autres de la deuxième tête 7.

En position de repos, la première tête 7 obture l'ouverture 14 de l'évidement 11, qui est située du côté de la première ouverture 3 du conduit.

Le passage du carburant à l'intérieur du conduit 2 est donc bloqué à la fois par la première tête 7, et par la deuxième tête 9 qui obture la deuxième ouverture 4 du conduit 2.

Lorsque la pression du carburant dépasse la force élastique du premier module 8 élastique, la première tête 7 s'éloigne de l'ouverture 14, ce qui permet le passage du carburant dans le conduit 2 à travers l'évidement 11, vers la deuxième ouverture 4 du conduit 2.

Dans un mode de réalisation, la deuxième tête 9 est de forme cylindrique, se terminant par une couronne 13 annulaire venant en appui contre des rebords 12 du conduit, lesdits rebords 12 entourant la deuxième ouverture 4.

Le diamètre de la couronne 13 annulaire est suffisamment grand pour obturer la deuxième ouverture 4 lorsque la deuxième tête 9 est en position de repos. La pression exercée par l'air, supérieure à la force élastique du deuxième module 10 élastique, permet d'écarter la couronne 13 des rebords 12, ce qui induit un passage pour l'air dans le conduit 2. En particulier, l'air peut s'écouler autour de la deuxième tête 9, dans l'espace présent entre les parois de la deuxième tête 9 et les parois internes du conduit 2.

Dans un mode de réalisation, la première tête 7 et la deuxième tête 9 sont aptes à se mouvoir en translation dans le conduit 2, selon des sens opposés.

Selon un exemple de réalisation, le dispositif 1 comprend une butée 16 d'arrêt permettant le blocage du déplacement de la première tête 7 selon le sens de déplacement de la deuxième tête 9. La butée 16 comprend notamment une base 17 se terminant par un doigt 18 s'étendant dans le conduit 2 jusqu'au niveau de l'ouverture 14 de la deuxième tête 9.

Le doigt 16 bloque la translation de la première tête 7 selon le sens de déplacement de la deuxième tête 9, ce qui permet d'obtenir une purge plus complète. En particulier, l'air peut s'écouler dans l'évidement 11 de la deuxième tête 9, et s'échapper de la deuxième tête par l'ouverture 14, qui n'est plus complètement obturée par la première tête 7.

Cette butée 16 réglable effleure la première tête 7 (par exemple, avec un jeu compris entre 0.5 et 1 mm) de telle sorte que la pression de l'air au moment de la purge déplace la deuxième tête 9, et, dans un deuxième temps, comprime le module élastique 8. A ce moment l'air de purge s'échappe à la fois entre le rebord 12 et la couronne 13, et par l'ouverture 14.

Comme représenté sur les figures, le premier module 8 élastique de la première tête 7 est fixé à une extrémité de la deuxième tête 9. Par conséquent, le déplacement de la deuxième tête 9 (à partir de la deuxième pression P2) entraîne le déplacement de la première tête 7 dans le même sens, c'est-à-dire vers la butée 16. Ceci résulte de l'effort subi par le premier module élastique 8.

Comme indiqué ci-dessus, la purge est donc plus complète, étant donné que l'ouverture 14 présente à l'autre extrémité la deuxième tête 9, et préalablement obturée par la première tête 7, est à présent libérée.

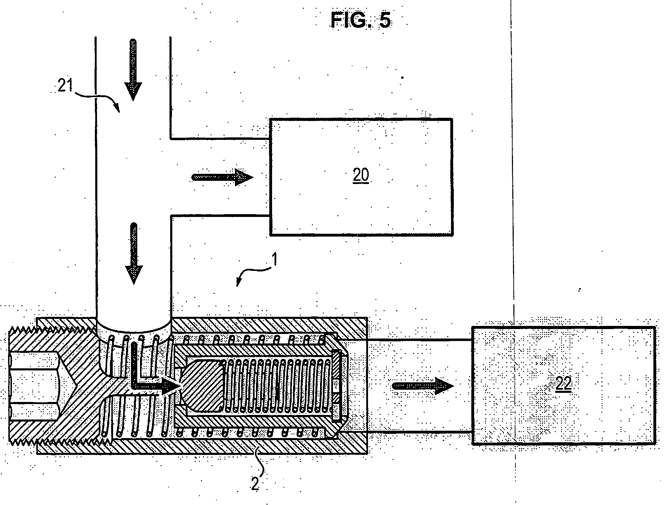

On a représenté en Figure 5 un schéma d'un mode de réalisation possible de l'utilisation du dispositif.

Au cours d'une première étape, du carburant circule dans un circuit 21 d'injection, à une pression inférieure à la pression permettant le déplacement du premier module 8 élastique.

Par conséquent, le carburant est transmis uniquement à un premier élément d'injection 20, qui est par exemple un élément d'injection d'un circuit de démarrage. Cet élément d'injection, également dénommé injecteur de démarrage, permet de projeter du carburant, afin d'allumer une partie de la chambre de combustion par inflammation du carburant avec une bougie.

La pression du carburant dans le circuit 20 d'injection augmente, de sorte que la première tête 7 se déplace, autorisant également le passage du carburant à travers le conduit 2 vers un autre élément d'injection 22 d'un circuit principal d'allumage, qui est configuré pour projeter du carburant à un débit permettant une inflammation du carburant dans toute la chambre de combustion, pour l'allumage de l'ensemble de la chambre de combustion.

Après extinction de la bougie et arrêt de l'alimentation en carburant, une purge est effectuée, au cours de laquelle l'air comprimé traverse le conduit 2, en sens inverse du sens de circulation du carburant, comme décrit précédemment. Cet air comprimé provient en général du compresseur de la turbomachine.

Cette purge permet de nettoyer les différents éléments traversés par l'air comprimé, comme le circuit d'injection, le circuit de démarrage, le circuit principal d'allumage, et les éléments d'injection.

De manière générale, une pluralité de dispositifs peuvent être utilisés conjointement à une pluralité de circuits d'allumage et d'éléments d'injections. Ceci permet de transmettre du carburant à différentes pressions, tout en assurant la possibilité que l'ensemble soit purgé de manière simple et efficace.

On obtient ainsi un ensemble comprenant une pluralité d'éléments d'injection de carburant (éléments permettant de projeter du carburant vers la chambre de combustion), et une pluralité de dispositifs dont le système d'obturation est configuré pour le passage de carburant à partir de premières pressions de valeurs différentes, de sorte que les éléments d'injection sont alimentés en carburant à des pressions différentes. Ceci permet de différencier différentes rampes d'injection en carburant selon la pression du carburant.

La purge s'effectue grâce à l'ensemble des dispositifs, dont le système d'obturation peut par exemple être réglé pour autoriser le passage d'air de la deuxième ouverture vers la première ouverture à partir d'une deuxième pression de l'air commune à tous les dispositifs.

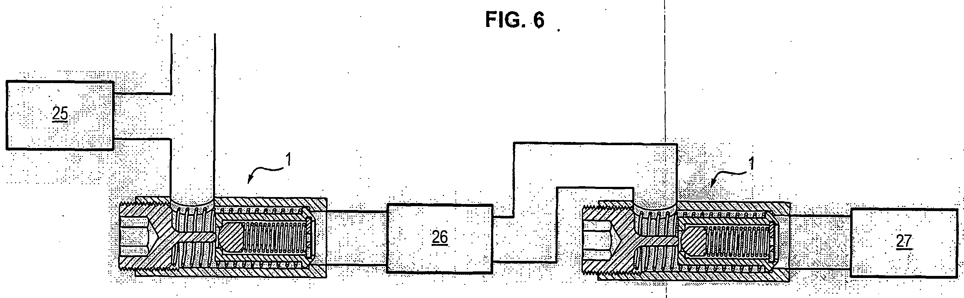

Ainsi, en Figure 6 :
- l'élément d'injection 25 reçoit du carburant dès la pression P1 ;
- l'élément d'injection 26 reçoit du carburant dès la pression P2, avec P2>P1 ;
- l'élément d'injection 27 reçoit du carburant dès la pression P3, avec P3>P2.

Avec une telle configuration, on peut allumer en cascade les éléments d'injection, et donc, on peut allumer en cascade des injecteurs de chambre disposés en série, à partir d'une alimentation commune en carburant. Les injecteurs de chambre sont donc mis en oeuvre en fonction de la valeur de la pression de carburant par rapport aux pressions P1, P2 et P3,

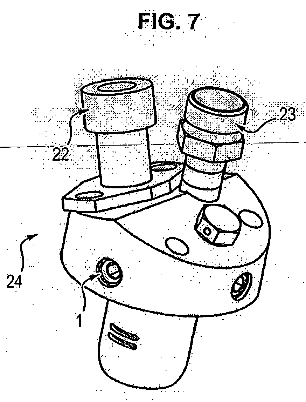

On a représenté schématiquement en Figure 7 un mode de réalisation d'un injecteur 24 de chambre de combustion de turbomachine. Il comprend une bougie 22 d'allumage de carburant, et une arrivée 23 de carburant. L'injecteur comprend le dispositif 1 tel que décrit précédemment. Il peut également être utilisé selon l'agencement tel que décrit en référence à la Figure 6, dans lequel une pluralité de circuits et d'éléments d'injection de carburant sont utilisés.

Cet injecteur de chambre s'insère de manière classique dans une turbomachine. L'injecteur de chambre est en général rapporté sur un carter de la chambre de combustion de la turbomachine.

## Revendications

1. Dispositif (1) pour injecteur de chambre de turbomachine, comprenant :
- un conduit (2) présentant au moins :
∘ une première ouverture (3), et
∘ une deuxième ouverture (4),
- un système (5) d'obturation du conduit, permettant de réguler le passage de fluides dans le conduit (2), le système (5) d'obturation comprenant :
∘ une première tête (7) montée sur un premier module (8) élastique, ladite première (7) tête étant apte à se déplacer pour autoriser le passage de carburant de la première ouverture (3) vers la deuxième ouverture (4) uniquement à partir d'une première pression (P1) du carburant, pour le passage d'une alimentation en carburant,
∘ une deuxième tête (9) montée sur un deuxième module (10) élastique, ladite deuxième tête (9) étant apte à se déplacer pour autoriser la traversée d'air de la deuxième ouverture (4) vers la première ouverture (3) à partir d'une deuxième pression (P2), pour autoriser le passage d'air de la deuxième ouverture (4) vers la première ouverture (3) uniquement à partir de la deuxième pression (P2) de l'air, pour le passage d'un air de purge, la deuxième pression étant supérieure à la première pression, et
- une butée (16) d'arrêt permettant le blocage du déplacement de la première tête (7) selon le sens de déplacement de la deuxième tête (9), **caractérisé en ce que**
le premier module (8) élastique de la première tête (7) est fixé à une extrémité de la deuxième tête (9), de sorte que le déplacement de la deuxième tête (9) à partir de la deuxième pression (P2) entraîne le déplacement de la première tête (7) vers la butée (16) d'arrêt.

2. Dispositif selon la revendication 1, dans lequel la première tête (7) est apte à se mouvoir à l'intérieur de la deuxième tête (9).

3. Dispositif selon l'une des revendications 1 ou 2, dans lequel la première tête (7) et la deuxième tête (9) sont aptes à se mouvoir en translation dans le conduit (2), selon des sens opposés.

4. Ensemble comprenant :
- une pluralité d'éléments (25, 26, 27) d'injection de carburant, et
- une pluralité de dispositifs selon l'une des revendications 1 à 3, dont le système (5) d'obturation est configuré pour le passage de carburant à partir de premières pressions de valeurs différentes, de sorte que les éléments d'injection sont alimentés en carburant à partir de pressions différentes.

5. Injecteur de chambre de turbomachine, **caractérisé en ce qu'**il comprend un dispositif selon l'une des revendications 1 à 3.

6. Turbomachine comprenant un injecteur de chambre selon la revendication 5.

## Patentansprüche

1. Vorrichtung (1) für Kammerinjektor einer Turbomaschine, umfassend:
- eine Leitung (2), die mindestens aufweist:
∘ eine erste Öffnung (3) und
∘ eine zweite Öffnung (4),
- ein Verschlusssystem (5) der Leitung, das erlaubt, den Durchgang von Fluiden in der Leitung (2) zu regulieren, wobei das Verschlusssystem (5) umfasst:
∘ einen ersten Kopf (7), der auf einem ersten elastischen Modul (8) montiert ist, wobei der erste Kopf (7) imstande ist, sich zu verlagern, um den Durchgang von Kraftstoff von der ersten Öffnung (3) zur zweiten Öffnung (4) nur mit Hilfe eines ersten Drucks (P1) des Kraftstoffs für den Durchgang einer Kraftstoffversorgung zu erlauben,
∘ einen zweiten Kopf (9), der auf einem zweiten elastischen Modul (10) montiert ist, wobei der zweite Kopf (9) imstande ist, sich zu verlagern, um die Durchleitung von Luft von der zweiten Öffnung (4) zur ersten Öffnung (3) mit Hilfe eines zweiten Drucks (P2) zu erlauben, um den Durchgang von Luft von der zweiten Öffnung (4) zur ersten Öffnung (3) nur mit Hilfe des zweiten Drucks (P2) der Luft für den Durchgang einer Reinigungsluft zu erlauben, wobei der zweite Druck höher als der erste Druck ist, und
- einen Stoppanschlag (16), der die Blockade der Verlagerung des ersten Kopfs (7) in der Verlagerungsrichtung des zweiten Kopfs (9) gestattet,
**dadurch gekennzeichnet, dass** das erste elastische Modul (8)des ersten Kopfs (7) an einem Ende des zweiten Kopfs (9) derart befestigt ist, dass die Verlagerung des zweiten Kopfs (9) mit Hilfe des zweiten Drucks (P2) die Verlagerung des ersten Kopfs (7) zum Stoppanschlag (16) bewirkt.

2. Vorrichtung nach Anspruch 1, wobei der erste Kopf (7) imstande ist, sich innerhalb des zweiten Kopfs (9) zu bewegen.

3. Vorrichtung nach einem der Ansprüche 1 oder 2, wobei der erste Kopf (7) und der zweiten Kopf (9) imstande sind, sich in der Leitung (2) in entgegengesetzten Richtungen verschiebend zu bewegen.

4. Einheit, umfassend:
- eine Vielzahl von Kraftstoffeinspritzelementen (25, 26, 27) und
- eine Vielzahl von Vorrichtungen nach einem der Ansprüche 1 bis 3, deren Verschlusssystem (5) für den Durchgang von Kraftstoff mit Hilfe von ersten Drücken mit unterschiedlichen Werten konfiguriert ist, so dass die Injektionselemente mit Hilfe von unterschiedlichen Drücken mit Kraftstoff versorgt werden.

5. Kammerinjektor einer Turbomaschine, **dadurch gekennzeichnet, dass** er eine Vorrichtung nach einem der Ansprüche 1 bis 3 umfasst.

6. Turbomaschine, umfassend einen Kammerinjektor nach Anspruch 5.

## Claims

1. A device (1) for combustion chamber injector in a turbomachine, including:
- a duct (2) having at least:
∘ a first opening (3), and
∘ a second opening (4),
- a system (5) for blocking the duct, making it possible to regulate the passage of fluids in the duct (2), the blocking system (5) including:
∘ a first head (7) mounted on a first elastic module (8), said first head (7) being capable of displacing to allow passage of fuel from the first opening (3) toward the second opening (4) only from a first pressure (P1) of the fuel, for passage of a supply of fuel,
∘ a second head (9) mounted on a second elastic module (10), said second head (9) being capable of displacing to allow transfer of air from the second opening (4) toward the first opening (3) from a second pressure (P2), to allow passage of air from the second opening (4) toward the first opening (3) only from the second pressure (P2) of the air, for passage of purge air, the second pressure being greater than the first pressure, and
- a stop (16) allowing blockage of the displacement of the first head (7) in the direction of displacement of the second head (9), **characterized in that**
the first elastic module (8) of the first head (7) is fixed at one end of the second head (9), such that the displacement of the second head (9) from the second pressure (P2) drives the displacement of the first head (7) toward the stop (16).

2. The device according to claim 1, wherein the first head (7) is capable of moving inside the second head (9).

3. The device according to one of claims 1 or 2, wherein the first head (7) and the second head (9) are capable of moving in translation in the duct (2), in opposite directions.

4. An assembly including:
- a plurality of fuel injection elements (25, 26, 27), and
- a plurality of devices according to one of claims 1 to 3, the blocking system (5) whereof is configured for passage of fuel from first pressures of different values, such that the injection elements are supplied with fuel from different pressures.

5. An injector for a combustion chamber of a turbomachine, **characterized in that** it includes a device according to one of claims 1 to 3.

6. A turbomachine including a combustion chamber injector according to claim 5.
